Europäisches Patentamt

European Patent Office

Office européen des brevets

(19)

(11) Publication number: **0 030 413**
**B1**

# EUROPEAN PATENT SPECIFICATION

(45) Date of publication of patent specification: **15.02.84**

(51) Int. Cl.³: **G 07 F 7/02, G 06 F 15/30**

(21) Application number: **80303823.1**

(22) Date of filing: **28.10.80**

(54) **A system for the handling of documents within a monetary establishment.**

(30) Priority: **29.11.79 SE 7909843**

(43) Date of publication of application:
**17.06.81 Bulletin 81/24**

(45) Publication of the grant of the patent:
**15.02.84 Bulletin 84/7**

(84) Designated Contracting States:
**AT BE CH DE FR GB IT LI NL**

(56) References cited:
**DE - A - 2 530 984**
**FR - A - 2 337 383**
**FR - A - 2 343 521**
**US - A - 3 833 885**
**US - A - 3 943 335**
**US - A - 3 979 647**
**US - A - 4 023 011**
**US - A - 4 106 667**

(73) Proprietor: **Lundblad, Leif**
**Häradsvägen 102**
**S-141 41 Huddinge (SE)**

(72) Inventor: **Lundblad, Leif**
**Häradsvägen 102**
**S-141 41 Huddinge (SE)**

(74) Representative: **Hartley, David et al,**
**c/o Withers & Rogers 4 Dyer's Buildings Holborn**
**London, EC1N 2JT (GB)**

Courier Press, Leamington Spa, England.

# A system for the handling of documents within a monetary establishment

## Technical field

The present invention results to systems for the handling of documents of value within a monetary establishment, such as a banking concern or postal institution, having a main office and a plurality of branch offices. More specifically the invention relates to apparatus comprising a main data processor and a plurality of control units and/or branch data processors.

## Background art

It is previously known to provide in banks and like monetary institutions unmanned devices by means of which e.g. money can be deposited and withdrawn, these devices being especially installed to provide an after-hours service. It is also known to provide such devices with separate cassettes having special locking means and means for rendering the contents of the cassette worthless if the cassette lid is forced by an unauthorized person.

When deposits or withdrawals are effected at banks or post offices through a transaction means provided with a special key, it is known to check and to register said transactions through a data processor associated with said transaction means, thereby to enable the credit balance of a customer to be checked and information concerning said credit balance to be given at any point of time.

Despite the provision of the aforesaid devices and arrangements, it must be said that hitherto conventional methods of handling money are encumbered with a number of disadvantages both with respect to safety and to economy. The knowledge that access can be had at certain times of day to large sums of money, may inspire people to burglery, with risk of injury to people and damage to the building concerned. The lack of money supply due to bad planning or as a result of unexpectedly large withdrawals can cause inconvenience to waiting customers. Poor supervision of the transportation of banknotes, etc., increases the chances of a thief escaping with his plunder. Misappropriation, e.g. fraudulent conversion, by internal, illegal transactions which are difficult to subsequently localize, also belongs to those elements which render the rational handling of money diffiult.

## Summary of the invention

The object of the invention is to substantially eliminate the aforementioned disadvantages. In an apparatus according to the invention, money is handled by the co-action between a main data processor incorporated in said system and a plurality of branch control units and/or branch data processors on one hand and on the other hand a plurality of readable cassettes which can be identified by the data processors, and which are arranged to co-operate with document handling means positioned at different locations. In this way it is possible to have available in the main data processor, at any moment of time, information concerning the position or location of the various cassettes and the money contained therein, and information on the conditions as to when cassettes may be removed from given locations and when cassettes must, of necessity, be placed in given locations, etc. This provides for safer handling of available money and enables the money to be utilized more economically.

The characterizing features of a system according to the invention are set forth in the claims.

## Brief description of the drawing

The invention will now be described in more detail with reference to the accompanying drawings, in which

Figure 1 illustrates schematically a system according to the invention incorporating a main office and a single branch office, and

Figure 2 illustrates such a system incorporating a plurality of branch offices.

## Detailed description of a preferred embodiment

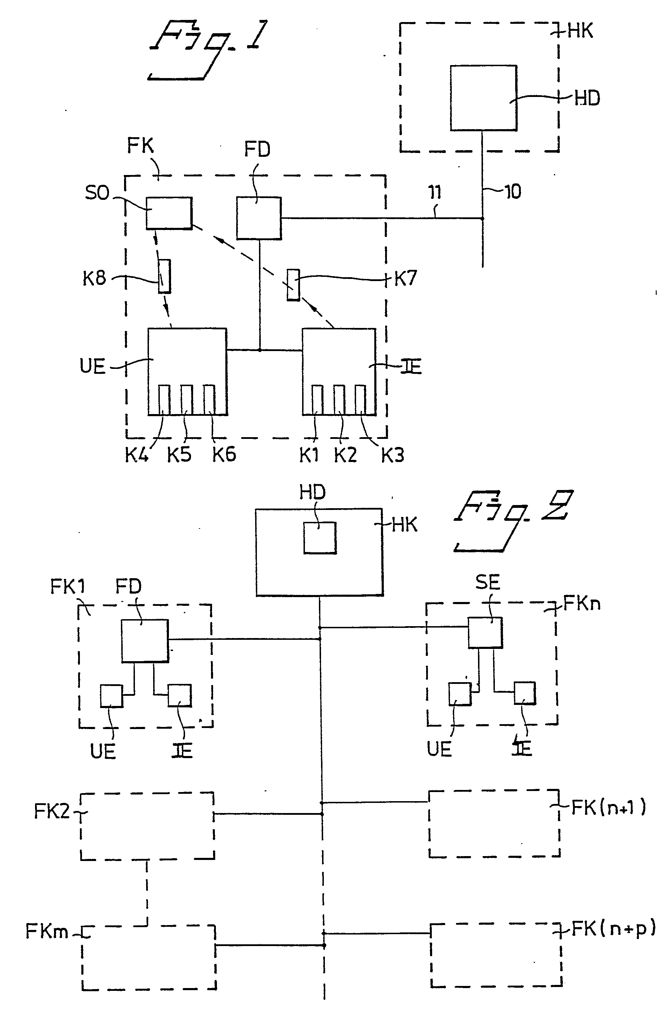

The system illustrated in Figure 1 comprises a main office HK having a main data processor HD, and a branch office FK having a branch data processor FD. The branch office FK is also provided with an infeed means IE operative to feed banknotes into a number of cassettes K1, K2, K3, ... and an outfeed means UE for feeding banknotes out of a number of cassettes K4, K5, K6 ... When the cassettes are placed in their intended positions in respective means, they can be individually identified by the branch data processor FD and, if so desired, also by the main data processor HD, since the two data processors are connected together over lines 10, 11. The design of the cassettes K1, K2 ... K6 and of the infeed and outfeed means IE and UE is such that when a cassette is placed in one of said means or banknotes are fed into or fed out of a cassette, an information signal concerning the operation in question is sent to the branch data processor FD and from there to the main data processor HD, either automatically or when required (when called). An individual reference number of a particular cassette, e.g. KO24, can be sent, e.g. automatically, to the branch data processor, by mutual co-action of the cassette KO24 and components of the infeed means IE, when the cassette is placed in said means, and in conjunction with each infeed transaction to said means, whereby information concerning, e.g., the number of banknotes fed in and the value thereof, together with the customer's name or account number is also sent to said main data processor. In this way it is also possible to obtain in the main data processor instantaneous information concerning the location of a cassette, the contents thereof, the balance of a customer's account, etc.

When a cassette is removed from the infeed means or the outfeed means, information to this effect is also sent to the branch data processor FD.

The cassettes are suitably provided with respective electronic locks, so that a cassette can only be opened upon receipt of a signal from the branch or main data processor. This enables one of the data processors to be equipped with suitable alarm means, arranged to come into operation if a cassette is not placed in its given location or if a cassette is not removed from its location within a given period of time. There are many possible variations in this respect, depending upon the different routines applied. The important thing is that through the data processors one has full control as to where the various cassettes are to be found or not to be found, and as to how many banknotes said cassettes contain and the value of these banknotes.

The branch office FK is also equipped with a banknote sorting means so operative to sort banknotes fed into cassettes previously placed in one of said infeed means, e.g. the infeed means IE. The sorting means SO is so designed that when a cassette is inserted in an infeed means, said cassette co-acts with components of said sorting means in a manner to cause the identity of said cassette (e.g. KO24) to be sent to the branch data processor FD or to the main data processor HD, and subsequent to the removal of all banknotes to send information relating to the previous contents of said cassette, which contents have now been inserted into one or more further cassettes, about which information has been sent in a corresponding manner to one of said data processors.

The aforementioned branch data processor FD, particularly in the case of small branch offices, can be replaced with a control unit, i.e. a unit which in principle is only a means of contact with the main data processor HD.

The system illustrated in Figure 2 incorporates a main office HK having a main data processor HD, a plurality of branch offices FK1, FK2 ... FKm each equipped with a respective branch data processor FD, infeed means IE and outfeed means UE, and a plurality of branch offices FKn, FK(n + l) ... FK(n + p) each having a respective control unit SE, infeed means IE and outfeed means UE. The construction and function of these units are the same as the construction and function of the units previously described with reference to Figure 1. One or more of the offices is suitably provided with a banknote sorting means SO (Fig. 1).

In a system of the kind illustrated and described, the banknotes are handled in a closed circuit, with those possibilities of increased surety and optimal use of the number of banknotes available which such a system affords. The individual coding electronics of respective cassettes enables at each moment of time information to be obtained concerning the contents of an individual cassette and as to where in the system or on which ordered conveyor path therein a cassette is located.

The use of a system according to the invention is not exclusive to banknotes, but can also be used in connection with other valuable documents, such as normal cheques and travellers cheques. The invention can also be applied in a manner such that an infeed means for feeding in such valuable documents is provided for co-operation with at least one of said control units or branch data processors. For all infeed means there are found cassettes which can be individually identified by respective branch data processors or the main data processor. The insertion and removal of a cassette into and out of one of said outfeed means and the outfeed of valuable documents from one of said cassettes, enables information relating to both said insertion and removal and also said outfeed to be sent to the main data processor via the control unit or branch data processor in question. Information concerning the locations of inserted cassettes and the content of valuable documents thereof is thus found also in this case.

Optimal use of the system is obtained when it can be used for both infeeding and outfeeding documents. Thus, means for intermediate document supply may be arranged to co-operate with at least one of said control units or branch data processors.

For all such means there are found cassettes which can be identified individually by respective branch data processors and the main data processor.

Equipment activatable both by relative movement between a cassette and any one of said means, and by relative movement between a document and any one of said means with a cassette located for the handling of documents, is arranged to enable information relating to the relative movement of both the cassette and the document to be sent to the main data processor via the control unit or branch data processor in question. Thus, there is present in the main data processor information concerning the identity of the cassettes and the possible connection to the infeed means or outfeed means, and the document contents of said cassettes. The relative movement between a cassette and one such means can be detected by the co-action between parts in the cassette and parts in a casing in said means, said casing being designed to receive said cassette. The relative movement between a document and one of said means can be detected by mechanical, electronic or optical sensing means arranged along a document-conveying path in said casing, between a cassette and an opening which is accessible to customers, desk clerks etc. from without.

As previously mentioned, the cassettes are suitably provided with electronically activatable locks. Activation of said locks can be effected from branch data processors or the main data processor at points of time incorporated in respective data programs. By lock is means here not only means for holding a cassette closed, but also means for holding said cassette in its casing in respective infeed and outfeed means.

Because said lock can only be released by means of said lock-activating signal from a branch data processor or from said main data processor, an operator or serviceman wishing to remove a cassette must first identify himself, e.g. electronically to one of said data processors. The lock-activating signal is sent automatically once said data processor has accepted the proof of identity submitted by said operator, e.g. in the form of an identity card.

The aforedescribed arrangement provides a positive check that the cassettes are to be found in their intended locations and of the contents of said cassettes.

## Claims

1. A system for the handling of such documents as banknotes, cheques and travellers cheques within a monetary establishment, e.g. a banking concern having a main office (HK) and a plurality of branch offices (FK1 ... FKm), comprising a main data processor (HD) and a plurality of branch control units (SE) and/or branch data processors (FD) arranged to co-operate with said main data processor, characterised in that document handling means (IE, UE) is arranged to co-operate with at least one of the control units (SE) and/or branch data processors (FD), cassettes (K1 ... K6) being provided which can be identified individually by respective branch data processors (FD) and the main data processor (HD) and serving for secure storage of documents and subsequent transport of the stored documents between different branch offices (FK1 ... FKm) or between a branch office and the main office, relative movement between a cassette and document handling means or between a document and a cassette handling said document, causing information relating both to the movement of the cassette and of the document to be supplied to the main data processor (HD) via the control unit (SE) or branch data processor (FD) in question, so that the main data processor contains information concerning the identity of the cassettes (K1 ... K6), the document content of the cassettes and their location, if any, in the document handling means (IE, UE).

2. A system according to claim 1, characterised in that each of the cassettes is provided with an electronic lock which can be activated from any one of the branch data processors (FD) and from the main data processor (HD).

3. A system according to claim 2, characterised in that the branch data processors and the main data processor are provided with alarm means for monitoring the insertion of the cassettes, the alarm means of respective data processors being arranged to be activated if a cassette has not been inserted within a given period of time.

4. A system according to claim 2, characterised in that the branch data processor and the main data processor are provided with cassette-monitoring means operative to ensure that a cassette can only be removed within a given period of time.

5. A system according to any one of claims 1 to 4, characterised in that arranged to co-operate with at least one of the branch control units or the branch data processors is a banknote-sorting means (SO) for sorting banknotes fed into cassettes which have previously been placed in the document handling means, and which enables information concerning the identity and contents of respective cassettes to be sent to the main data processor via the control unit or branch data processor (FD) in question.

## Revendications

1. Système de manipulation de documents, tels que des billets de banque, des chèques et des chèques de voyage, dans un établissement bancaire, tel que, par exemple, une banque ayant un bureau principal (HK) et un certain nombre de succursales (FK1, ... FKm), comprenant un ordinateur principal (HD) et un certain nombre d'unités de commande de succursales (SE) et/ou d'ordinateurs de succursales (FD) conçus pour coopérer avec l'ordinateur principal, système caractérisé en ce que les moyens de manipulation de documents (IE, UE) sont conçus pour coopérer avec l'une au moins des unités de commande (SE) et/ou des ordinateurs de succursales (FD), des cassettes (K1 ... K6) étant utilisées de manière à pouvoir être identifiées individuellement par les ordinateurs de succursales respectifs (FD) et par l'ordinateur principal (HD), ces cassettes servant à assurer le stockage des documents et leur transport ultérieur entre les différentes succursales (FK1 ... FKm) ou entre une succursale et le bureau principal, le mouvement relatif entre une cassette et les moyens de manipulation de documents, ou entre un document et une cassette qui le manipule, produisant une information relative à la fois au movement de la cassette et à celui du document à fournir à l'ordinateur principal (HD), par l'intermédiaire de l'unité de commande (SE) ou de l'ordinateur de succursale (FD) en question, de façon que l'ordinateur principal contienne les informations concernant l'identité des cassettes (K1 ... K6), le contenu des cassettes en documents, et leur position, s'il y a lieu, dans les moyens de manipulation de documents (IE, UE).

2. Système selon la revendication 1, caractérisé en ce que chacune des cassettes est munie de moyens de verrouillage électroniques, pouvant être actionnés à partir de l'un quelconque des ordinateurs de succursales (FD) et à partir de l'ordinateur principal (HD).

3. Système selon la revendication 2, caractérisé en ce que les ordinateurs de succursales et l'ordinateur principal sont munis de moyens d'alarme avertissant de l'introduction des cassettes, les moyens d'alarme des différents ordinateurs étant conçus de manière à être mis en marche si une cassette n'a pas été introduite dans un lamps de temps donné.

4. Système selon la revendication 2, caractérisé en ce que l'ordinateur de succursale et l'ordinateur principal sont munis de moyens de contrôle de cassette servant à s'assurer qu'une cassette ne peut être retirée que dans un laps de temps donné.

5. Système selon l'une quelconque des revendications 1 à 4, caractérisé en ce que des moyens de tri de billets de banque (SO) sont utilisés pour coopérer avec l'une au moins des unités de commande de succursales ou ordinateurs de succursales, ces moyens de tri de billets servant à trier les billets de banque introduits dans les cassettes qui ont été préalablement placées dans les moyens de manipulation de documents, et à déclencher une information concernant l'identité et le contenu des différentes cassettes, à envoyer à l'ordinature principal par l'intermédiaire de l'unité de commande ou l'ordinateur de succursales (FD) en question.

**Patentansprüche**

1. Ein System für die Beförderung derartiger Wertpapiere wie Geldscheine, Schecks und Reiseschecks innerhalb eines Geldinstituts, z.B. eines Bankkonzerns, der ein Hauptbüro (HK) und mehrere Zweigstellen (FK1 ... FKm) umfasst, einschliesslich einem Hauptdatenverarbeiter (HD) und einer Anzahl von Zweigstellenreglern (SE) und/oder Nebendatenverarbeitern (FD), die dazu angeordnet sind, um mit genanntem Hauptdatenverarbeiter zusammenzuwirken, dadurch gekennzichnet, dass Wertpapierverarbeitungsvorrichtungen (IE, UE) vorgesehen sind, um mit wenigstens einem der Zweigstellenregler (SE) und/oder den Nebendatenverarbeitern (FD) zusammenzuarbeiten, dass Kassetten (K1 ... K6) vorgesehen sind, die einzeln identifiziert werden können durch die jeweiligen Nebendatenverarbeiter (FD) und durch den Hauptdatenverarbeiter (HD) und die zume gesicherten Speichern von Wertpapieren und darauffolgender Weiterleitung der gespeicherten Wertpapiere zwischen den verschiedenen Zweigstellen (FK1 ... FKm) oder zwischen einer Zweigstelle und dem Hauptdatenverarbeiter dienen, wobei Relativbewegung zwischen einer Kassette und einer Wertpapierverarbeitungsvorrichtung oder zwischen einem Wertpapier und einer der genannten Kassetten Information verursacht über sowohl die Bewegung der Kassette als auch des Wertpapiers, die dem Hauptdatenverarbeiter (HD) übermittelt wird durch den Regler (SE) oder den in Frage kommenden Nebendatenverarbeiter (FD), sodass der Hauptdatenverarbeiter die Information über die Identität der Kassetten (K1-K6) enthält und den Wertinhalt der Kassetten und ihrer Position, wenn vorhanden, innerhalb der Wertpapierverarbeitungsvorrichtung (IE, EU).

2. Ein System nach Anspruch 1, dadurch gekennzeichnet, dass jede der Kassetten mit einer elektronischen Sperre versehen ist, die von jedem der Nebendatenverarbeiter (FD) und von dem Hauptdatenverarbeiter (HD) aus angeschaltet werden kann.

3. Ein System nach Anspruch 2, dadurch gekennzeichnet, dass die Nebendatenverarbeiter und der Hauptdatenverarbeiter mit einer Alarmanlage ausgestattet sind, um das Einlegen der Kassetten zu überwachen, welche Alarmanlage der betreffenden Datenverarbeiter derart angeordnet ist, dass sie ausgelöst wird, wenn eine Kassette nicht in einer gegebenen Zeitspanne eingelegt worden ist.

4. Ein System nach Anspruch 2, dadurch gekennzeichnet, dass der Nebendatenverarbeiter und der Hauptdatenverarbeiter mit einer die Kassetten überwachenden Vorrichtung ausgestattet sind, die arbeitet um sicherzustellen, dass eine Kassette nur innerhalb einer gegebenen Zeitspanne herausgenommen werden kann.

5. Ein System nach Anspruch 1 bis 4, dadurch gekennzeichnet, dass, um mit wenigstens einem der Zweigstellenregler oder der Nebendatenverarbeiter zusammenzuwirken, ein Geldscheinsortierer (SO) eingebaut ist, der die den Kassetten zugeführten Geldscheine sortiert, wobei die Kassetten vorher in die Transportanlage gelegt wurden, was ermöglicht, Information über die Identität und den Inhalt der betreffenden Kassetten zu dem Hauptdatenverarbeiter durch den Regler oder den in Frage kommenden Nebendatenverarbeiter (FD) weiterzugeben.

*Fig.1*

*Fig.2*